# EUROPÄISCHE PATENTANMELDUNG

(11) **EP 4 198 417 A1**
(43) Veröffentlichungstag der Anmeldung: **21.06.2023**
(21) Anmeldenummer: 22211568.5
(22) Anmeldetag: 06.12.2022
(51) Int. Cl.: F25B 30/02, F25B 41/40, F16F 15/02, F16L 55/04, F16L 59/14, F24F 13/20, F24F 13/24

(54) **WÄRMEPUMPENVORRICHTUNG**

(30) Priorität: 15.12.2021 DE 102021133191
(71) Anmelder: Viessmann Climate Solutions SE, 35108 Allendorf (DE)
(72) Erfinder: Lang, Eduard, 35108 Allendorf (DE); Schmidt, Thorsten, 35041 Marburg (DE)
(74) Vertreter: Wolf & Wolf Patent- und Rechtanwaltsgesellschaft mbH

(57) **Zusammenfassung**

Die Erfindung betrifft eine Wärmepumpenvorrichtung, umfassend ein Teile wie Träger- und Wandelemente aufweisendes Gehäuse (1), eine im Gehäuse (1) angeordnete Wärmepumpenkomponente (2), eine mit der Wärmepumpenkomponente (2) verbundene Fluidleitung (3) und eine an der Fluidleitung (3) befestigte Wärmedämmeinrichtung (4). Nach der Erfindung ist vorgesehen, dass zwischen der Wärmedämmeinrichtung (4) und einem Teil des Gehäuses (1) ein Schwingungsdämpfungselement (5) angeordnet ist.

## Beschreibung

Die Erfindung betrifft eine Wärmepumpenvorrichtung gemäß dem Oberbegriff des Patentanspruchs 1.

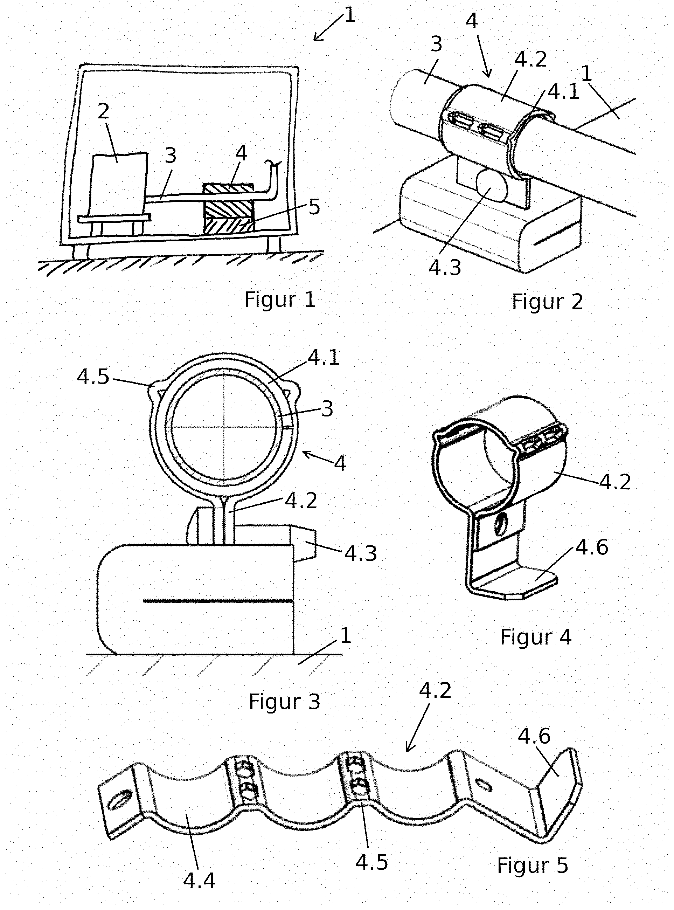

Eine Wärmepumpenvorrichtung der eingangs genannten Art ist aus dem Patentdokument EP 2 119 978 A1 bekannt. Eine solche besteht aus einem Teile wie Träger- und Wandelemente aufweisenden Gehäuse, einer im Gehäuse angeordneten Wärmepumpenkomponente, einer mit der Wärmepumpenkomponente verbundenen Fluidleitung und einer an der Fluidleitung befestigten Wärmedämmeinrichtung (siehe dort in Figur 3 Bezugszeichen 220).

Der Erfindung liegt die Aufgabe zugrunde, eine Wärmepumpenvorrichtung der eingangs genannten Art zu verbessern. Insbesondere soll eine akustischen Anforderungen noch besser genügende Wärmepumpenvorrichtung geschaffen werden.

Diese Aufgabe ist mit einer Wärmepumpenvorrichtung der eingangs genannten Art durch die im Kennzeichen des Patentanspruchs 1 aufgeführten Merkmale gelöst.

Nach der Erfindung ist also vorgesehen, dass zwischen der Wärmedämmeinrichtung und einem Teil des Gehäuses ein Schwingungsdämpfungselement angeordnet ist.

Mit anderen Worten zeichnet sich die erfindungsgemäße Wärmepumpenvorrichtung somit dadurch aus, dass neben der Wärmedämmeinrichtung ein separates Schwingungsdämpfungselement vorgesehen ist, das darüber hinaus vorzugsweise nicht fest mit dem Gehäuse verbunden, sondern sich nur an diesem abstützend ausgebildet ist. Wie ersichtlich, führt diese Maßgabe dabei dazu, dass von der Fluidleitung kommende, resonante Schwingungen bzw. Vibrationen gedämpft werden und, wenn überhaupt, nur reduziert an das Gehäuse übertragen werden, was zur Folge hat, dass dieses nicht oder jedenfalls weniger als bei der vorbekannten Lösung zum Schwingen angeregt wird und damit letztlich weniger Schall abstrahlt. Zusätzlich wird die Beanspruchung der Fluidleitung reduziert, was die Betriebsfestigkeit erhöht.

Andere vorteilhafte Weiterbildungen der erfindungsgemäßen Wärmepumpenvorrichtung ergeben sich aus den abhängigen Patentansprüchen.

Die erfindungsgemäße Wärmepumpenvorrichtung einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: schematisch im Schnitt ein erstes Ausführungsbeispiel der erfindungsgemäßen Wärmepumpenvorrichtung;
- Figur 2: perspektivisch ein zweites Ausführungsbeispiel der erfindungsgemäßen Wärmepumpenvorrichtung mit einer besonderen Halterung;
- Figur 3: teilweise im Schnitt und als Vorderansicht das Ausführungsbeispiel gemäß Figur 2;
- Figur 4: perspektivisch die besondere Halterung gemäß den Figuren 2 und 3; und
- Figur 5: perspektivisch und abgewickelt die besondere Halterung gemäß den Figuren 2 bis 4.

Die in den Figuren dargestellte Wärmepumpenvorrichtung besteht zunächst ganz allgemein aus einem Teile wie Träger- und Wandelemente aufweisenden Gehäuse 1, einer im Gehäuse 1 angeordneten Wärmepumpenkomponente 2 (insbesondere ein Verdichter bzw. Kompressor), einer mit der Wärmepumpenkomponente 2 verbundenen Fluidleitung 3 (insbesondere Kältemittelleitung) und einer an der Fluidleitung 3 befestigten Wärmedämmeinrichtung 4.

Wesentlich für die erfindungsgemäße Wärmepumpenvorrichtung ist nun, dass zwischen der Wärmedämmeinrichtung 4 und einem Teil des Gehäuses 1 ein Schwingungsdämpfungselement 5 angeordnet ist.

Dabei ist besonders bevorzugt vorgesehen, dass die Wärmedämmeinrichtung 4 als ein an einer Stelle mit besonders großer Schwingungsamplitude der Fluidleitung 3 angeordneter Stützfuß für die Fluidleitung 3 ausgebildet ist. Bei der Auslegung der Wärmepumpenvorrichtung werden die Fluidleitungen also zunächst orientiert an den sonstigen Erfordernissen im Gehäuse 1 angeordnet und fixiert. Anschließend wird ermittelt, an welchen Stellen der frei verlaufenden Fluidleitungen sich bei betriebsbedingt induzierten Schwingungen die größten Schwingungsamplituden ergeben. Genau an diesen Stellen wird dann der erfindungsgemäße Stützfuß platziert, der seinerseits also nicht als eigentlicher Halter für die Fluidleitung, sondern als (worauf weiter unten noch genauer eingegangen wird) jedenfalls nicht formschlüssig mit dem Gehäuse 1 verbundener Dämpfer dient.

In diesem Sinne ist dabei weiterhin bevorzugt vorgesehen, dass sich das Schwingungsdämpfungselement 5 am Gehäuse 1 abstützend ausgebildet ist.

Damit das Schwingungsdämpfungselement 5 dauerhaft und von alleine in seiner Position bleibt (also nicht verrutscht), ist ferner besonders bevorzugt vorgesehen, dass der dem Schwingungsdämpfungselement 5 zugeordnete Teil des Gehäuses 1 als horizontal verlaufende Ebene ausgebildet ist.

Ferner ist besonders bevorzugt vorgesehen, dass das Schwingungsdämpfungselement 5 aus einer plastisch verformbaren, aber auch elastische Eigenschaften aufweisenden Masse gebildet ist. Noch etwas konkreter betrachtet ist dabei bevorzugt vorgesehen, dass das Schwingungsdämpfungselement 5 aus Kautschuk, vorzugsweise synthetischem Kautschuk, besonders bevorzugt aus TEROSON^{®} (Markenprodukt der Firma Henkel AG & Co. KGaA), gebildet ist. Dabei ist anzumerken, dass die Darstellungen des Schwingungsdämpfungselements 5 in den Figuren 1 bis 3 schematisch zu verstehen sind: In Realität ist vorgesehen (was sich aber nur schlecht zeichnerisch darstellen lässt), dass die besagte Masse an die Wärmedämmeinrichtung 4 angeknetet ausgebildet ist.

Dabei ist ferner (wie insbesondere in den Figuren 2 und 3 erkennbar) ganz besonders bevorzugt vorgesehen, dass die Wärmedämmeinrichtung 4 ein im direkten Kontakt mit der Fluidleitung 3 stehendes Wärmedämmelement 4.1 und eine zwar mit dem Wärmedämmelement 4.1, aber nicht mit der Fluidleitung 3 in Kontakt stehende Halterung 4.2 umfasst. Das Wärmedämmelement 4.1 ist dabei bevorzugt aus einem schlecht wärmeleitenden Material, insbesondere aus Filz, gebildet. Ferner ist bevorzugt vorgesehen, dass die Halterung 4.2 weder die Fluidleitung 3 noch das Gehäuse 1 berührend ausgebildet ist.

Noch etwas genauer betrachtet (siehe insbesondere auch Figur 4 und 5) ist bevorzugt vorgesehen, dass die Halterung 4.2 aus einem Blechstreifen gebildet ist. Außerdem ist bevorzugt vorgesehen, dass die Halterung 4.2 das die Fluidleitung 3 vollständig umschließende Wärmedämmelement 4.1 vollständig umschließend ausgebildet ist.

Zur Befestigung der Wärmedämmeinrichtung 4 an der Fluidleitung 3 ist bevorzugt vorgesehen, dass ein freies Ende der Halterung 4.2 um das Wärmedämmelement 4.1 herumgeführt und mit einer Schraube 4.3 an sich selbst befestigt ausgebildet ist.

Insbesondere mit Verweis auf Figur 5 ist weiterhin bevorzugt vorgesehen, dass die Halterung 4.2 vorgeformt mit zur Fluidleitung 3 passenden Wölbungen 4.4 und dazwischen angeordneten Biegesollstellen 4.5 ausgebildet ist.

Ganz besonders bevorzugt ist ferner (siehe hierzu insbesondere Figur 4) vorgesehen, dass die Halterung 4.2 einen parallel zum Gehäuse 1 bzw. zur oben genannten, horizontal verlaufende Ebene des Gehäuses 1 erstreckten Halterungsfuß 4.6 aufweist. Dabei ist das Schwingungsdämpfungselement 5 vorzugsweise mindestens zwischen dem Gehäuse 1 und dem Halterungsfuß 4.6 angeordnet. Außerdem ist bevorzugt vorgesehen, dass das Schwingungsdämpfungselement 5 auch auf einer vom Gehäuse 1 abgewandten Seite des Halterungsfußes 4.6 angeordnet ist.

Schließlich ist noch besonders bevorzugt vorgesehen, dass das Wärmedämmelement 4.1 eine für einen Überhitzungsschutz des Schwingungsdämpfungselements 5 ausreichende Wärmedämmwirkung aufweisend ausgebildet ist. Auf diese Weise ist es möglich, das Schwingungsdämpfungselement 5 aus einem zwar hitzeempfindlichen, dafür aber schwingungsdämfpungstechnisch besonders günstigen Material zu bilden, das sonst bei einem Direktkontakt mit der Fluidleitung 3 eventuell Schaden nehmen würde. Dies berücksichtigt dabei ferner insbesondere den Umstand, dass die Fluidleitung 3 der erfindungsgemäßen Wärmepumpenvorrichtung im Betrieb durchaus über 80°C heiß werden kann, also eine Temperatur erreicht, die die Festigkeit des Materials des Schwingungsdämpfungselements 5 negativ beeinflussen könnte.

### Bezugszeichenliste

- 1: Gehäuse
- 2: Wärmepumpenkomponente
- 3: Fluidleitung
- 4: Wärmedämmeinrichtung
- 4.1: Wärmedämmelement
- 4.2: Halterung
- 4.3: Schraube
- 4.4: Wölbung
- 4.5: Biegesollstelle
- 4.6: Halterungsfuß
- 5: Schwingungsdämpfungselement

## Patentansprüche

1. Wärmepumpenvorrichtung, umfassend ein Teile wie Träger- und Wandelemente aufweisendes Gehäuse (1), eine im Gehäuse (1) angeordnete Wärmepumpenkomponente (2), eine mit der Wärmepumpenkomponente (2) verbundene Fluidleitung (3) und eine an der Fluidleitung (3) befestigte Wärmedämmeinrichtung (4),
**dadurch gekennzeichnet,**
**dass** zwischen der Wärmedämmeinrichtung (4) und einem Teil des Gehäuses (1) ein Schwingungsdämpfungselement (5) angeordnet ist.

2. Wärmepumpenvorrichtung nach Anspruch 1,
**dadurch gekennzeichnet,**
**dass** die Wärmedämmeinrichtung (4) als ein an einer Stelle mit besonders großer Schwingungsamplitude der Fluidleitung (3) angeordneter Stützfuß für die Fluidleitung (3) ausgebildet ist.

3. Wärmepumpenvorrichtung nach Anspruch 1 oder 2,
**dadurch gekennzeichnet,**
**dass** sich das Schwingungsdämpfungselement (5) am Gehäuse (1) abstützend ausgebildet ist.

4. Wärmepumpenvorrichtung nach einem der Ansprüche 1 bis 3,
**dadurch gekennzeichnet,**
**dass** der dem Schwingungsdämpfungselement (5) zugeordnete Teil des Gehäuses (1) als horizontal verlaufende Ebene ausgebildet ist.

5. Wärmepumpenvorrichtung nach einem der Ansprüche 1 bis 4,
**dadurch gekennzeichnet,**
**dass** das Schwingungsdämpfungselement (5) aus einer plastisch verformbaren, aber auch elastische Eigenschaften aufweisenden Masse gebildet ist.

6. Wärmepumpenvorrichtung nach einem der Ansprüche 1 bis 5,
**dadurch gekennzeichnet,**
**dass** die Wärmedämmeinrichtung (4) ein im direkten Kontakt mit der Fluidleitung (3) stehendes Wärmedämmelement (4.1) und eine zwar mit dem Wärmedämmelement (4.1), aber nicht mit der Fluidleitung (3) in Kontakt stehende Halterung (4.2) umfasst.

7. Wärmepumpenvorrichtung nach Anspruch 6,
**dadurch gekennzeichnet,**
**dass** das Wärmedämmelement (4.1) aus einem schlecht wärmeleitenden Material gebildet ist.

8. Wärmepumpenvorrichtung nach Anspruch 6 oder 7,
**dadurch gekennzeichnet,**
**dass** die Halterung (4.2) weder die Fluidleitung (3) noch das Gehäuse (1) berührend ausgebildet ist.

9. Wärmepumpenvorrichtung nach einem der Ansprüche 6 bis 8,
**dadurch gekennzeichnet,**
**dass** das Wärmedämmelement (4.1) eine für einen Überhitzungsschutz des Schwingungsdämpfungselements (5) ausreichende Wärmedämmwirkung aufweisend ausgebildet ist.

10. Wärmepumpenvorrichtung nach einem der Ansprüche 6 bis 9,
**dadurch gekennzeichnet,**
**dass** die Halterung (4.2) das die Fluidleitung (3) vollständig umschließende Wärmedämmelement (4.1) vollständig umschließend ausgebildet ist.

11. Wärmepumpenvorrichtung nach einem der Ansprüche 6 bis 10,
**dadurch gekennzeichnet,**
**dass** ein freies Ende der Halterung (4.2) um das Wärmedämmelement (4.1) herumgeführt und mit einer Schraube (4.3) an sich selbst befestigt ausgebildet ist.

12. Wärmepumpenvorrichtung nach einem der Ansprüche 6 bis 11,
**dadurch gekennzeichnet,**
**dass** die Halterung (4.2) vorgeformt mit zur Fluidleitung (3) passenden Wölbungen (4.4) und dazwischen angeordneten Biegesollstellen (4.5) ausgebildet ist.

13. Wärmepumpenvorrichtung nach einem der Ansprüche 6 bis 12,
**dadurch gekennzeichnet,**
**dass** die Halterung (4.2) einen parallel zum Gehäuse (1) erstreckten Halterungsfuß (4.6) aufweist.

14. Wärmepumpenvorrichtung nach Anspruch 13,
**dadurch gekennzeichnet,**
**dass** das Schwingungsdämpfungselement (5) mindestens zwischen dem Gehäuse (1) und dem Halterungsfuß (4.6) angeordnet ist.

15. Wärmepumpenvorrichtung nach Anspruch 14,
**dadurch gekennzeichnet,**
**dass** das Schwingungsdämpfungselement (5) auch auf einer vom Gehäuse (1) abgewandten Seite des Halterungsfußes (4.6) angeordnet ist.
